# EUROPEAN PATENT SPECIFICATION

(11) **EP 3 943 625 B1**
(45) Date of publication and mention of the grant of the patent: **25.11.2026**
(21) Application number: 19924044.1
(22) Date of filing: 18.09.2019
(51) Int. Cl.: C22B 11/00, C22B 3/12, C22B 3/16

(54) **ENVIRONMENTALLY FRIENDLY NON-CYANIDE GOLD EXTRACTOR, PREPARATION METHOD AND USE THEREOF**
UMWELTFREUNDLICHER NICHT-CYANIDISCHER GOLD-EXTRAKTOR, VERFAHREN ZU SEINER HERSTELLUNG UND SEINE VERWENDUNG
EXTRACTEUR D'OR SANS CYANURE RESPECTUEUX DE L'ENVIRONNEMENT, SON PROCÉDÉ DE PRÉPARATION ET SON UTILISATION

(30) Priority: 11.04.2019 CN 201910288556
(43) Date of publication of application: 26.01.2022
(73) Proprietor: Shaanxi Normal University, Chang'an District Xi'an, Shaanxi 710119 (CN)
(72) Inventor: YANG, Peng, Xi'an, Shaanxi 710119 (CN); WANG, Dong, Xi'an, Shaanxi 710119 (CN)
(74) Representative: LLR
(86) International application number: PCT/CN2019/106477
(87) International publication number: WO 2020/206933

(56) References cited:
- CN-A- 1 133 617
- CN-A- 101 384 737
- CN-A- 103 935 954
- CN-A- 107 540 604
- CN-A- 110 029 230
- US-A- 4 997 532
- CHUNLIN YUE ET AL: "Environmentally Benign, Rapid, and Selective Extraction of Gold from Ores and Waste Electronic Materials", ANGEWANDTE CHEMIE, WILEY - V C H VERLAG GMBH & CO. KGAA, DE, vol. 129, no. 32, 30 June 2017 (2017-06-30), pages 9459 - 9463, XP071371583, ISSN: 0044-8249, DOI: 10.1002/ANGE.201703412
- 乐春林 (LE, CHUNLIN): "利用NBS/Py体系从金矿和电子垃圾中提取金的应用研究 (Non-official translation: Application Research of Using NBS / Py System to Extract Gold from Gold Mine and Electronic Waste)", 中国优秀硕士学位论文全文数据库 工程科技I辑 (CHINESE MASTER’S THESES FULL-TEXT DATABASE, ENGINEERING SCIENCE & TECHNOLOGY I), no. 2018, 5, 15 May 2018 (2018-05-15), XP55742078, ISSN: 1674-0246, DOI: 20191102233113A

## Description

### Technical Field

The invention relates to the field of gold metallurgy, and in particular, to an environment-friendly non-cyanide gold extraction agent, a preparation method, and use thereof, and more particularly to an environment-friendly gold extraction solution comprising alkaline Br and a solid pyridine derivative, a preparation method, and use thereof.

### Background Art

As a natural resource, there are limited reserves of gold ores on the earth. It has been found that there are 100,000 tons of reserves of gold ores around the world. In 2017, China's gold production reached 481.8 tons, accounting for 12.6% of the world's gold production. However, many gold-containing ores also contain sulfur, arsenic, and carbon, and are difficult to extract gold. It requires a process of calcination before gold can be extracted therefrom, which increases the cost of gold leaching. Gold ores can be hereby classified into easy-to-leach and refractory gold ores. The refractory gold ores refer to those having a leaching rate of less than 50% upon treatment with a gold extraction agent without any pretreatment. Therefore, pretreatment is an essential production process for refractory gold ores. Currently, refractory gold ores account for 60% of reserves of gold ores around the world, so does China. One third of gold produced in the world is derived from refractory ores.

There is a huge demand for gold, and however, gold ores are limited. The gold content in e-waste is higher than that in gold ores, and thus extracting gold from e-waste can increase the gold production. The amount of e-waste is increasing surprisingly around the world, reaching 41.8 million tons in 2014, of which the United States is listed in the first rank for producing 7.1 million tons of e-waste, followed by China with producing 6 million tons of e-waste. By the end of 2017, the amount of global e-waste reached 65.4 million tons. As a populous country, there is a large consumption of electronic products in China, leading to a huge amount of e-waste every year. In addition, about 80% of e-waste around the world eventually goes to the developing countries, such as China, India, and Pakistan.

At present, the primary method for extracting gold in industry is cyanidation, which has the characteristics of well-established technological process, good economic feasibility, and strong ore adaptability. In addition to cyanide, acidic or corrosive solutions, such as thiourea and thiosulfate, can be used to leach out gold from gold ores and e-waste. However, the leaching agents currently used and studied have considerable disadvantages in that, for example, cyanide and thiourea have high toxicity and thiosulfate is unstable; secondly, the leaching agent needs an extreme alkaline/acid pH condition in use, e.g., a pH of about 11 is required when using cyanide, and a pH of about 1.5 is required when using thiourea, all of which are unfavorable for the environment and human health. In view of these, there is an urgent need for developing an environment-friendly gold extraction agent for gold ores and e-waste.

CHUNLIN YUE ET AL: "Environmentally Benign, Rapid, and Selective Extraction of Gold from Ores and Waste Electronic Materials", ANGEWANDTE CHEMIE, WILEY- VC H VERLAG GMBH & CO. KGAA, DE, vol. 129, no. 32, 30 June 2017 (2017-06-30), pages 9459-9463, XP071371583, ISSN: 0044-8249, DOl: 10.1002/ANGE.201703412 describes an NBS/Py gold extraction system which comprises a liquid pyridine.

The information disclosed in the Background section is only intended to enhance understanding of the general background of the invention and should not be taken as an acknowledgement or in any form implying that the information constitutes the prior art already known by one of ordinary skill in the art.

### Summary of the Invention

### Purpose of the invention

To solve the above technical problems, the invention aims to provide an environment-friendly non-cyanide gold extraction agent, a preparation method, and use thereof. The environment-friendly non-cyanide gold extraction agent provided by the invention comprises a solid pyridine derivative, N-bromosuccinimide (hereinafter sometimes referred to as NBS for short), and a base, and is not restricted by a low liquid-solid ratio required in industrial production (as for a gold extraction reagent, large consumption of liquid in industrial production will increase the requirement for equipment, as well as the difficulty in treating liquid waste, and therefore, the requirement for liquid-solid ratio is extremely strict in industrial production), and can achieve an industrially acceptable high gold leaching rate with an industrially allowable low liquid-solid ratio and at a low reagent concentration, thus being suitable for industrial application; and it achieves a high gold leaching rate with a relatively low toxicity; and the reagents used are cheap and easily available, and the use thereof is not limited by long-distance transportation, thus facilitating large-scale industrial application. The method for preparing the environment-friendly non-cyanide gold extraction agent provided by the invention can be carried out under a mild condition in a simple process.

### Solutions

In order to realize the purpose of the invention, an embodiment of the invention provides an environment-friendly non-cyanide gold extraction agent, which comprises a solid pyridine derivative, N-bromosuccinimide, and a base. Wherein, mixing of the base and N-bromosuccinimide in an aqueous solution can form an aqueous alkaline Br solution, in which NBS is transformed into molecular bromine and bromine ions, which have much smaller molecular sizes than NBS, leading to a significant improvement in their ability to diffuse into gold ores as well as in the extent of reaction. The environment-friendly non-cyanide gold extraction agent is in the form for sale or transportation.

According to the invention as claimed, it is provided an environment-friendly non-cyanide gold extraction agent, comprising a solid pyridine derivative, N-bromosuccinimide, and a base;
wherein the base and the N-bromosuccinimide are mixed in an aqueous solution in which N-bromosuccinimide is transformed into molecular bromine and bromine ions; and
wherein the solid pyridine derivative comprises at least one of pyridine hydrochloride, 4-dimethylaminopyridine, 4-hydroxypyridine, or 2,2-bipyridine.

In one possible embodiment of said environment-friendly non-cyanide gold extraction agent, the base comprises at least one of potassium hydroxide, sodium hydroxide, quicklime, sodium carbonate, or sodium bicarbonate.

In one possible embodiment of said environment-friendly non-cyanide gold extraction agent, the ratio of the amount of N-bromosuccinimide to the amount of the solid pyridine derivative in the environment-friendly non-cyanide gold extraction agent is 1-50:5-300, optionally 5-20:10-200. The embodiment of invention also provides an aqueous solution of the environment-friendly non-cyanide gold extraction agent, which comprises an aqueous alkaline Br solution and a solid pyridine derivative; wherein, the aqueous alkaline Br solution comprises N-bromosuccinimide, a base, and water. Said aqueous solution of the environment-friendly non-cyanide gold extraction agent is in the form when the gold extraction agent is in use.

According to the invention as claimed it is provided an aqueous solution of the claimed environment-friendly non-cyanide gold extraction agent, which comprises said aqueous alkaline Br solution and said solid pyridine derivative dissolved into said aqueous solution.

The embodiment of the invention also provides a method for preparing the aqueous solution of the environment-friendly non-cyanide gold extraction agent, comprising the following steps:
dissolving N-bromosuccinimide in an aqueous solution, adding a base, and stirring to obtain an aqueous alkaline Br solution;
dissolving a solid pyridine derivative in the aqueous alkaline Br solution to obtain the aqueous solution of the environment-friendly non-cyanide gold extraction agent.

In one possible embodiment of said aqueous solution of the environment-friendly non-cyanide gold extraction agent and the preparation method thereof, the solid pyridine derivative comprises at least one of pyridine hydrochloride, 4-dimethylaminopyridine, 4-hydroxypyridine, or 2,2-bipyridine.

In one possible embodiment of said aqueous solution of the environment-friendly non-cyanide gold extraction agent and the preparation method thereof, the base comprises at least one of potassium hydroxide, sodium hydroxide, quicklime, sodium carbonate, or sodium bicarbonate.

In one possible embodiment of said aqueous solution of the environment-friendly non-cyanide gold extraction agent and the preparation method thereof, the concentration of N-bromosuccinimide in the aqueous alkaline Br solution is 1-50 mM, optionally 5-20 mM, and further optionally 10-15 mM. In one possible embodiment of said aqueous solution of the environment-friendly non-cyanide gold extraction agent and the preparation method thereof, the concentration of the solid pyridine derivative in the aqueous solution of the environment-friendly non-cyanide gold extraction agent is 5-300 mM, optionally 10-200 mM, and further optionally 50-100 mM.

In one possible embodiment of said aqueous solution of the environment-friendly non-cyanide gold extraction agent and the preparation method thereof, there is no special limitation to the amount of addition of the base, as long as it can dissolve N-bromosuccinimide.

In one possible embodiment of the preparation method, after dissolving the solid pyridine. derivative in the aqueous alkaline Br solution, the pH of the solution is adjusted to 4.0-9.0, optionally 6.0-9.0, further optionally 7.0-8.0.

In one embodiment of the invention, also provided is the use of said environment-friendly non-cyanide gold extraction agent in extracting gold from low-grade ores and e-waste.

In one possible embodiment of said use, the low-grade ores or e-waste are added into said aqueous solution of the environment-friendly non-cyanide gold extraction agent at a solid-liquid ratio of 1:2, stirring for 20 h at 300 rpm, followed by suction filtration to obtain a gold lixivium from the low-grade ores or e-waste.

### Beneficial effects

(1) As a solid reagent, the environment-friendly non-cyanide gold extraction agent provided in the embodiment of the invention does not have the extremely strong odor of liquid pyridine, and the use thereof is not limited by long-distance transportation, thus facilitating large-scale industrial application. The environment-friendly non-cyanide gold extraction agent or the aqueous solution of the environment-friendly non-cyanide gold extraction agent provided in the embodiment of the invention employs an aqueous alkaline Br solution and a solid pyridine derivative, to oxidize gold atoms into trivalent gold ions, which then form complexes with the pyridine derivative. As such, gold atoms continuously react with the extraction agent, thus achieving a high gold leaching rate.

An industrially acceptable high gold leaching rate (more than 80%) can be obtained by using solid pyridine derivatives in an industrially acceptable low liquid-solid ratio (such as 2:1 or 1.5:1) and at a low reagent concentration (such as 10 mM); and the solid pyridine derivatives have low toxicity with low price and can be used to extract gold from various types of gold ores and various e-waste with high adaptability.

Solid pyridine derivatives such as pyridine hydrochloride and 4-methylaminopyridine have higher solubility and water solubility, and can be better dispersed in an aqueous solution as compared to the liquid pyridine.

An aqueous alkaline Br solution can be formed by pretreating the oxidant N-bromosuccinimide (NBS) with sodium hydroxide, potassium hydroxide, or quicklime in an aqueous solution; in the alkaline Br aqueous solution, NBS is transformed into molecular bromine and bromine ions, which have much smaller molecular sizes than NBS, leading to a significant improvement in their ability to diffuse into gold ores as well as in the extent of reaction.

(2) According to the preparation method of the aqueous solution of the environment-friendly non-cyanide gold extraction agent provided in the embodiment of the invention, after dissolving the solid pyridine derivative in the alkaline Br aqueous solution, the pH is adjusted to 7.0-8.0, which results in a high gold leaching rate. At low pH, pyridine will form a salt, and thereby is unable to participate in the gold leaching process, while at high pH, as an oxidant, the alkaline Br aqueous solution exhibits a decreased oxidation on gold, resulting in a low gold leaching rate.

(3) According to the preparation method of the aqueous solution of the environment-friendly non-cyanide gold extraction agent provided in the embodiment of the invention, the gold leaching rate from ores and e-waste can further be improved by controlling the concentrations of NBS and solid pyridine derivatives.

(4) The preparation method of the aqueous solution of the environment-friendly non-cyanide gold extraction agent provided in the embodiment of the invention can be carried out under a mild condition in a simple process with being environment-friendly.

### Brief Description of the Drawings

One or more embodiments are exemplarily illustrated with reference to the figures in the accompanying Drawings that correspond thereto and are not intended to be limiting of the embodiments. As used herein, the word "exemplarily" means "serving as an example, embodiment, or illustrative". Any embodiment described herein as "exemplarily" is not necessarily to be construed as being superior to or better than other embodiments.

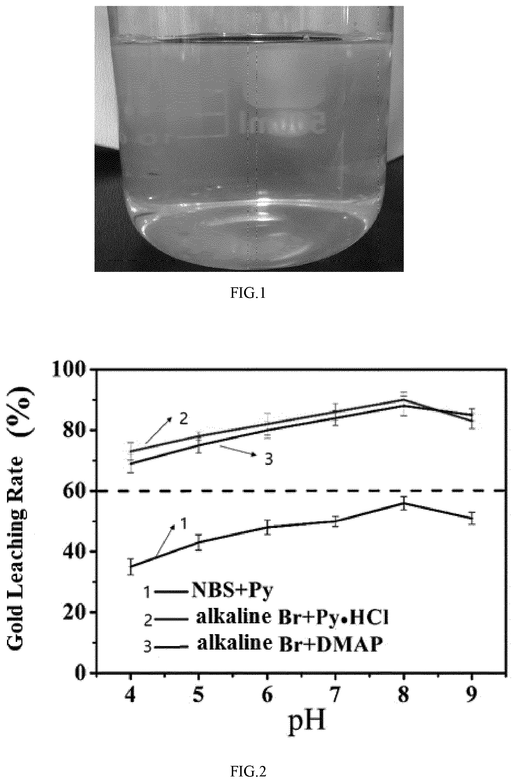

FIG. 1 shows an aqueous solution of the environment-friendly non-cyanide gold extraction agent prepared in Example 1 of the present invention.
FIG. 2 shows the gold leaching rates from gold ore by the NBS/Py (abbreviation for pyridine) gold extraction solution (curve 1), the aqueous solution of the alkaline Br/pyridine hydrochloride environment-friendly non-cyanide gold extraction agent (curve 2), the aqueous solution of the alkaline Br/DMAP (abbreviation for 4-dimethylaminopyridine) environment-friendly non-cyanide gold extraction agent (curve 3) at different pH values as measured in Experiment Example 1 of the present invention.

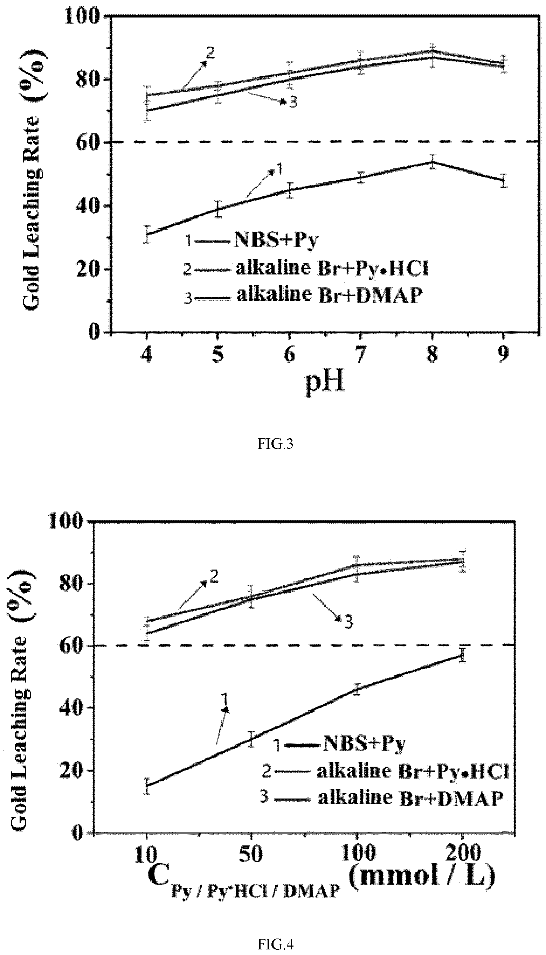

FIG. 3 shows the gold leaching rates from e-waste by the NBS/Py gold extraction solution (curve 1), the aqueous solution of the alkaline Br/pyridine hydrochloride environment-friendly non-cyanide gold extraction agent (curve 2), the aqueous solution of the alkaline Br/DMAP environment-friendly non-cyanide gold extraction agent (curve 3) at different pH values as measured in Experiment Example 1 of the present invention.
FIG. 4 shows the gold leaching rates from gold ores by the NBS/Py gold extraction solution (curve 1), the aqueous solution of the alkaline Br/pyridine hydrochloride environment-friendly non-cyanide gold extraction agent (curve 2), the aqueous solution of the alkaline Br/DMAP environment-friendly non-cyanide gold extraction agent (curve 3) at different concentrations of pyridine derivative as measured in Experiment Example 2 of the present invention.

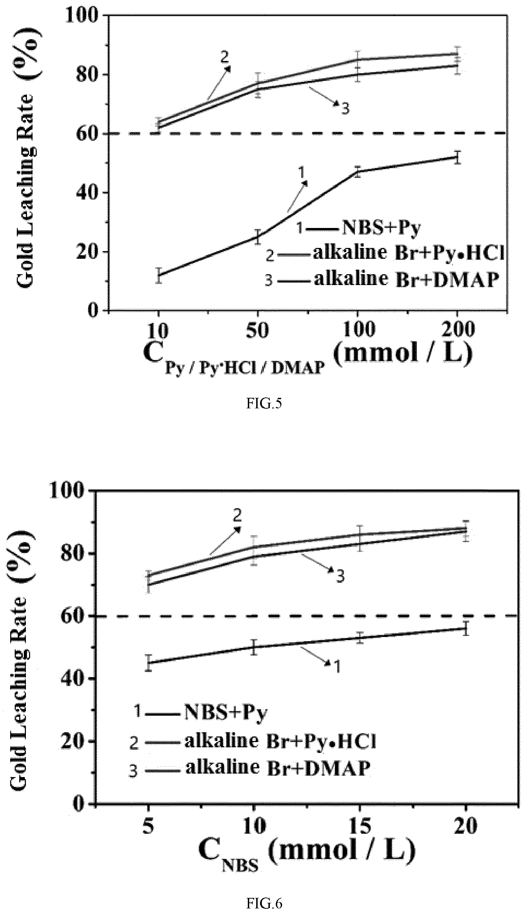

FIG. 5 shows the gold leaching rates from e-waste by the NBS/Py gold extraction solution (curve 1), the aqueous solution of the alkaline Br/pyridine hydrochloride environment-friendly non-cyanide gold extraction agent (curve 2), the aqueous solution of the alkaline Br/DMAP environment-friendly non-cyanide gold extraction agent (curve 3) at different concentrations of pyridine derivative as measured in Experiment Example 2 of the present invention.
FIG. 6 shows the gold leaching rates from gold ores by the NBS/Py gold extraction solution (curve 1), the aqueous solution of the alkaline Br/pyridine hydrochloride environment-friendly non-cyanide gold extraction agent (curve 2), the aqueous solution of the alkaline Br/DMAP environment-friendly non-cyanide gold extraction agent (curve 3) at different concentrations of N-bromosuccinimide as measured in Experiment Example 3 of the present invention.

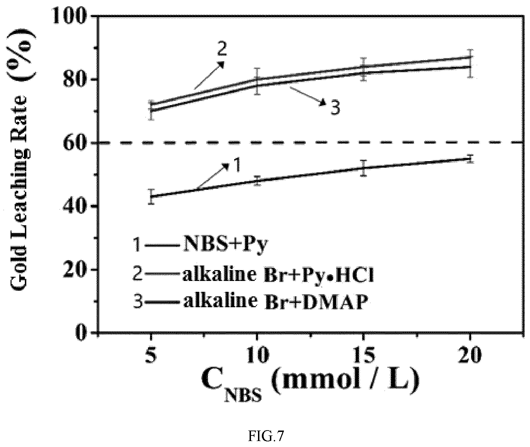

FIG. 7 shows the gold leaching rates from e-waste by the NBS/Py gold extraction solution (curve 1), the aqueous solution of the alkaline Br/pyridine hydrochloride environment-friendly non-cyanide gold extraction agent (curve 2), the aqueous solution of the alkaline Br/DMAP environment-friendly non-cyanide gold extraction agent (curve 3) at different concentrations of N-bromosuccinimide as measured in Experiment Example 3 of the present invention.

### Detailed Description of the Invention

In order to make the purpose, technical solutions, and advantages of the present invention clearer, the technical solutions of the invention will be clearly and completely illustrated with reference to one or more examples and the corresponding figures.

Obviously, the described examples are just part of examples of the present invention, but not all of them. Based on the described examples of the present invention, all other examples obtainable by those of ordinary skill in the art without creative work are within the scope of the present invention. Throughout the specification and claims, the term "comprising" or variations thereof, such as "including" or "containing" and the like, will be understood to include the stated components and not to exclude other elements or other components, unless expressly indicated otherwise.

These examples are not intended to limit the scope of protection. Unless otherwise stated, any example herein is not necessarily to be construed as being superior to or better than other examples.

In addition, in order to better explain the present invention, a lot of specific details are given in the following examples. It will be understood by those skilled in the art that the present invention may be practiced without certain specific details. In some examples, methods, means, elements well known to those skilled in the art, and experimental methods generally according to conventional conditions and according to the conditions described in the manual or according to the conditions suggested by the manufacturer are not described in detail to highlight the present invention. The used materials, reagents and the like are conventionally commercially available, unless otherwise specified.

### Example 1

1. An alkaline Br/pyridine hydrochloride environment-friendly non-cyanide gold extraction agent comprises 0.0178 g of N-bromosuccinimide (NBS), 0.005 g of sodium hydroxide, and 0.1157 g of pyridine hydrochloride.
2. An alkaline Br/DMAP environment-friendly non-cyanide gold extraction agent comprises 0.0178 g of N-bromosuccinimide, 0.005 g of sodium hydroxide, and 0.1227 g of 4-methylaminopyridine (DMAP).
3. An aqueous solution of the alkaline Br/pyridine hydrochloride environment-friendly non-cyanide gold extraction agent comprises 0.0178 g of N-bromosuccinimide (NBS), 0.005 g of sodium hydroxide, 0.1157 g of pyridine hydrochloride, and 10 g of water;

The method for preparing the same was as follows:
0.0178 g of N-bromosuccinimide was added to 10 mL of aqueous solution, 0.005 g of sodium hydroxide was then added, and then the solution was well stirred to obtain 10 mL of alkaline Br solution at pH 5.2 with the N-bromosuccinimide concentration of 10 mM;
0. 1157 g of pyridine hydrochloride was added to the above alkaline Br solution, and the pH was adjusted to 7.0 with NaOH to prepare a mixed aqueous solution, namely the aqueous solution of the alkaline Br/pyridine hydrochloride environment-friendly non-cyanide gold extraction agent, in which the concentration of N-bromosuccinimide was 10 mM and the concentration of pyridine hydrochloride was 100 mM.

As can be seen from FIG. 1, the aqueous solution of the environment-friendly non-cyanide gold extraction agent was colorless and transparent.

4. An aqueous solution of the alkaline Br/DMAP environment-friendly non-cyanide gold extraction agent comprises 0.0178 g of N-bromosuccinimide, 0.005 g of sodium hydroxide, 0.1227 g of 4-methylaminopyridine (DMAP), and 10 g of water;

The method for preparing the same was as follows:
0.0178 g of N-bromosuccinimide was added to 10 mL of aqueous solution, 0.005 g of sodium hydroxide was then added, and then the solution was well stirred to obtain 10 mL of alkaline Br solution at pH 5.2 with the N-bromosuccinimide concentration of 10 mM;
0.1227 g of 4-methylaminopyridine was added to the above alkaline Br solution, and the pH was adjusted to 7.0 with NaOH to prepare a mixed aqueous solution, namely, the aqueous solution of the alkaline Br/DMAP environment-friendly non-cyanide gold extraction agent, in which the concentration of N-bromosuccinimide was 10 mM and the concentration of 4-methylaminopyridine was 100 mM.

### Comparative Example 1

An NBS/Py gold extraction solution, which was prepared according to the following steps:
0.0178 g of N-bromosuccinimide was added to 10 mL of aqueous solution, then 81 µL of pyridine was added, and the pH was adjusted to 7.0 with NaOH to prepare the NBS/Py gold extraction solution in which the concentration of N-bromosuccinimide was 10 mM and the concentration of pyridine was 100 mM.

### Comparative Example 2

An alkaline Br/Py gold extraction solution, which was prepared according to the following steps: 0.0178 g of N-bromosuccinimide was added to 10 mL of aqueous solution, 0.005 g of sodium hydroxide was then added, and then the solution was well stirred to obtain 10 mL of alkaline Br solution at pH 5.2 with the N-bromosuccinimide concentration of 10 mM;
81 µL of pyridine was then added, and the pH was adjusted to 7.0 with NaOH to prepare the alkaline Br/Py gold extraction solution in which the concentration of N-bromosuccinimide was 10 mM and the concentration of pyridine was 100 mM.

### Comparative Example 3

An NBS/pyridine hydrochloride gold extraction solution, which was prepared according to the following steps:
0.0178 g of N-bromosuccinimide was added to 10 mL of aqueous solution, and 0.1157 g of pyridine hydrochloride was added to prepare an NBS/pyridine hydrochloride gold extraction solution in which the concentration of N-bromosuccinimide was 10 mM and the concentration of pyridine hydrochloride was 100 mM.

### Experiment Example 1

### 1. Preparation of aqueous solutions of the environment-friendly non-cyanide gold extraction agent with different pH values

Aqueous solutions of the alkaline Br/pyridine hydrochloride environment-friendly non-cyanide gold extraction agent with different pH values were prepared according to the same preparation method as that of Example 1, except that 0.1157 g of pyridine hydrochloride was added to an alkaline Br solution, and then the pH was adjusted to 4.0, 5.0, 6.0, 7.0, 8.0, and 9.0 with NaOH, respectively, to obtain six kinds of aqueous solutions of the alkaline Br/pyridine hydrochloride environment-friendly non-cyanide gold extraction agent with different pH values;
Aqueous solutions of the alkaline Br/DMAP environment-friendly non-cyanide gold extraction agent with different pH values were prepared according to the same preparation method as that of Example 1, except that 0.1227 g of 4-methylaminopyridine (DMAP) was added to an alkaline Br solution, and the pH was adjusted to 4.0, 5.0, 6.0, 7.0, 8.0, and 9.0 with NaOH, respectively, to obtain six kinds of aqueous solutions of the alkaline Br/DMAP environment-friendly non-cyanide gold extraction agent with different pH values.

### 2. Preparation of NBS/Py gold extraction solutions with different pH values

The NBS/Py gold extraction solutions with different pH values were prepared according to the same preparation method as that of Comparative Example 1, except that after adding pyridine, the pH was adjusted to 4.0, 5.0, 6.0, 7.0, 8.0, and 9.0 with NaOH, to obtain six kinds of NBS/Py gold extraction solutions with different pH values.

### 3. Determination of the gold leaching rate from low-grade gold ores

1 g of low-grade gold ores was added to the aqueous solutions of the environment-friendly non-cyanide gold extraction agent prepared as above, the NBS/Py gold extraction solution, and aqua regia, respectively, at a solid-liquid ratio of 1:2, stirring for 20 h at 300 rpm, followed by suction filtration to obtain the gold lixiviums from the low-grade gold ores.

The gold leaching rate from low-grade gold ores was determined as follows: the gold contents in the aqueous solution of the environment-friendly non-cyanide gold extraction agent, the NBS/Py gold extraction solution, and aqua regia were detected by ICP-MS, respectively.

In the invention, the gold leaching rate was the ratio of the gold content in the aqueous solution of the environment-friendly non-cyanide gold extraction agent or in the NBS/Py gold extraction solution to that in aqua regia.

The results were shown in FIG. 2.

FIG. 2 showed the gold leaching rates from gold ores by the NBS/Py gold extraction solution (curve 1), the aqueous solution of the alkaline Br/pyridine hydrochloride environment-friendly non-cyanide gold extraction agent (curve 2), the aqueous solution of the alkaline Br/DMAP environment-friendly non-cyanide gold extraction agent (curve 3) at different pH values, and the optimal pH condition corresponding to the highest leaching rate, namely, the changing curves of gold leaching rate by the NBS/Py gold extraction solution, the aqueous solution of the alkaline Br/pyridine hydrochloride environment-friendly non-cyanide gold extraction agent, and the aqueous solution of the alkaline Br/DMAP environment-friendly non-cyanide gold extraction agent at various pH values, and the dotted line in the figure was the minimum leaching rate requirement in the process of extracting gold from gold ores and e-waste in industry.

### 4. Determination of the gold leaching rate from the mobile phone circuit board

5 g of the mobile phone circuit board was added to the aqueous solutions of the environment-friendly non-cyanide gold extraction agent prepared as above and aqua regia, respectively, at a solid-liquid ratio of 1:2, stirring for 20 h at 300 rpm, followed by suction filtration to obtain the gold lixiviums from the mobile phone circuit board.

The gold leaching rate from the mobile phone circuit board was determined by the same method as above, and the results were shown in FIG. 3.

FIG. 3 showed the gold leaching rates from e-waste by the NBS/Py gold extraction solution (curve 1), the aqueous solution of the alkaline Br/pyridine hydrochloride environment-friendly non-cyanide gold extraction agent (curve 2), the aqueous solution of the alkaline Br/DMAP environment-friendly non-cyanide gold extraction agent (curve 3) at different pH values, and the optimal pH condition corresponding to the highest leaching rate, and the dotted line in the figure was the minimum leaching rate requirement in the process of extracting gold from gold ores and e-waste in industry.

### Experiment Example 2

### 1. Preparation of aqueous solutions of the environment-friendly non-cyanide gold extraction agent with different concentrations of pyridine derivative

Aqueous solutions of the alkaline Br/pyridine hydrochloride environment-friendly non-cyanide gold extraction agent with different concentrations of pyridine derivative were prepared according to the same preparation method as that of Example 1, except that 0.0116 g, 0.0578 g, 0.1157 g, and 0.2314 g of pyridine hydrochloride were added to the alkaline Br solution, respectively, and the pH was adjusted to 7.0 with NaOH to obtain four kinds of aqueous solutions of the alkaline Br/pyridine hydrochloride environment-friendly non-cyanide gold extraction agent with different concentrations of pyridine hydrochloride (having the pyridine hydrochloride concentration of 10 mM, 50 mM, 100 mM, and 200 mM, respectively).

Aqueous solutions of the alkaline Br/DMAP environment-friendly non-cyanide gold extraction agent with different concentrations of pyridine derivative were prepared according to the same preparation method as that of Example 1, except that 0.0123 g, 0.0545 g, 0.1227 g, and 0.2454 g of 4-methylaminopyridine were added to the alkaline Br solution, respectively, and the pH was adjusted to 7.0 with NaOH to obtain four kinds of aqueous solutions of the alkaline Br/DMAP environment-friendly non-cyanide gold extraction agent with different concentrations of 4-methylaminopyridine (having the 4-methylaminopyridine concentration of 10 mM, 50 mM, 100 mM, and 200 mM, respectively).

### 2. Preparation of NBS/Py gold extraction solutions with different concentrations of pyridine

The NBS/Py gold extraction solutions with different concentrations of pyridine were prepared according to the same preparation method as that of Comparative Example 1, except that after adding 20 µL, 40 µL, 80 µL, and 120 µL of pyridine, respectively, the pH was adjusted to 7.0 with NaOH to obtain four kinds of NBS/Py gold extraction solutions with different concentrations of pyridine.

### 3. Determination of the gold leaching rate from low-grade gold ores

1 g of low-grade gold ores was added to the aqueous solutions of the environment-friendly non-cyanide gold extraction agent prepared as above, the NBS/Py gold extraction solution, and aqua regia, respectively, at a solid-liquid ratio of 1:2, stirring for 20 h at 300 rpm, followed by suction filtration to obtain the gold lixiviums from the low-grade gold ores.

The gold leaching rate from low-grade gold ores was determined as follows: the gold contents in the aqueous solution of the environment-friendly non-cyanide gold extraction agent, the NBS/Py gold extraction solution, and aqua regia were detected by ICP-MS respectively, and the gold leaching rate was defined as the ratio of the gold content in the aqueous solution of the environment-friendly non-cyanide gold extraction agent or in the NBS/Py gold extraction solution to that in aqua regia. The results were shown in FIG. 4.

FIG. 4 showed the gold leaching rates from gold ores by the NBS/Py gold extraction solution (curve 1), the aqueous solution of the alkaline Br/pyridine hydrochloride environment-friendly non-cyanide gold extraction agent (curve 2), the aqueous solution of the alkaline Br/DMAP environment-friendly non-cyanide gold extraction agent (curve 3) at different concentrations of pyridine derivative, and the dotted line in the figure was the minimum leaching rate requirement in the process of extracting gold from gold ores and e-waste in industry. The gold leaching rate of the gold extraction agent prepared by N-bromosuccinimide and pyridine under various conditions did not exceed 60% of the minimum leaching rate requirement in the process of extracting gold from gold ores and e-waste in industry.

### 4. Determination of the gold leaching rate from the mobile phone circuit board

5 g of the mobile phone circuit board was added to the aqueous solutions of the environment-friendly non-cyanide gold extraction agent prepared as above and aqua regia, respectively, at a solid-liquid ratio of 1:2, stirring for 20 h at 300 rpm, followed by suction filtration to obtain the gold lixiviums from the mobile phone circuit board.

The gold leaching rate from the mobile phone circuit board was determined by the same method as above, and the results were shown in FIG. 5.

FIG. 5 showed the gold leaching rates from e-waste by the NBS/Py gold extraction solution (curve 1), the aqueous solution of the alkaline Br/pyridine hydrochloride environment-friendly non-cyanide gold extraction agent (curve 2), the aqueous solution of the alkaline Br/DMAP environment-friendly non-cyanide gold extraction agent (curve 3) at different concentrations of pyridine derivative, and the dotted line in the figure was the minimum leaching rate requirement in the process of extracting gold from e-waste in industry. It can be seen from the experiment results that the combination of alkaline Br and pyridine derivatives had a higher gold leaching rate at pH of 7.0-8.0 than that at other pH values, and the neutral pH was suitable for the actual extraction of gold from e-waste. Furthermore, the combination of alkaline Br and pyridine derivatives exhibited a higher gold leaching rate from e-waste, as compared to the NBS/Py gold extraction solution.

### Experiment Example 3:

### 1. Preparation of aqueous solutions of the environment-friendly non-cyanide gold extraction agent with different NBS concentrations

Aqueous solutions of the alkaline Br/pyridine hydrochloride environment-friendly non-cyanide gold extraction agent with different NBS concentrations were prepared according to the same preparation method as Example 1, except that 0.0089 g, 0.0178 g, 0.0267 g, and 0.0356 g of N-bromosuccinimide were added to 10 mL of aqueous solution, respectively, and then 0.001 g, 0.005 g, 0.009 g, and 0.013 g of sodium hydroxide were added, respectively, and then the solutions were well stirred to prepare alkaline Br solutions with the N-bromosuccinimide concentration of 5 mM, 10 mM, 15 mM, and 20 mM respectively; the remaining steps were the same as those of Example 1 to obtain four kinds of aqueous solutions of the alkaline Br/pyridine hydrochloride environment-friendly non-cyanide gold extraction agent with the N-bromosuccinimide concentration of 5 mM, 10 mM, 15 mM, and 20 mM, respectively, and with the pyridine hydrochloride concentration of 100 mM;
Aqueous solutions of the alkaline Br/DMAP environment-friendly non-cyanide gold extraction agent with different NBS concentrations were prepared according to the same preparation method as Example 1, except that 0.0089 g, 0.0178 g, 0.0267 g, and 0.0356 g of N-bromosuccinimide were added to 10 mL of aqueous solution, respectively, and then 0.001 g, 0.005 g, 0.009 g, and 0.013 g of sodium hydroxide were added, respectively, and then the solutions were well stirred to prepare alkaline Br solutions with the N-bromosuccinimide concentration of 5 mM, 10 mM, 15 mM, and 20 mM respectively; the remaining steps were the same as those of Example 1 to obtain four kinds of aqueous solutions of the alkaline Br/pyridine hydrochloride environment-friendly non-cyanide gold extraction agent with the N-bromosuccinimide concentration of 5 mM, 10 mM, 15 mM, and 20 mM, respectively, and with the pyridine hydrochloride concentration of 100 mM;

### 2. Preparation of NBS/Py gold extraction solutions with different NBS concentrations

The NBS/Py gold extraction solutions with different NBS concentrations were prepared according to the same preparation method as that of Comparative Example 1, except that 0.0089 g, 0.0178 g, 0.0267 g, 0.0356 g of N-bromosuccinimide were added to 10 mL of aqueous solution, respectively, to obtain four kinds of NBS/Py gold extraction solutions with different NBS concentrations.

### 3. Determination of the gold leaching rate from low-grade gold ores

1 g of low-grade gold ores was added to the aqueous solutions of the environment-friendly non-cyanide gold extraction agent prepared as above, the NBS/Py gold extraction solution, and aqua regia, respectively, at a solid-liquid ratio of 1:2, stirring for 20 h at 300 rpm, followed by suction filtration to obtain the gold lixiviums from the low-grade gold ores.

The gold leaching rate from low-grade gold ores was determined as follows: the gold contents in the aqueous solution of the environment-friendly non-cyanide gold extraction agent, the NBS/Py gold extraction solution, and aqua regia were detected by ICP-MS respectively, and the leaching rate was defined as the ratio of the gold content in the aqueous solution of the environment-friendly non-cyanide gold extraction agent or in the NBS/Py gold extraction solution to that in aqua regia. The results were shown in FIG. 6.

FIG. 6 showed the gold leaching rates from gold ores by the NBS/Py gold extraction solution (curve 1), the aqueous solution of the alkaline Br/pyridine hydrochloride environment-friendly non-cyanide gold extraction agent (curve 2), the aqueous solution of the alkaline Br/DMAP environment-friendly non-cyanide gold extraction agent (curve 3) at different concentrations of pyridine derivative, and the dotted line in the figure was the minimum leaching rate requirement in the process of extracting gold from gold ores and e-waste in industry.

### 4. Determination of the gold leaching rate from the mobile phone circuit board

5 g of the mobile phone circuit board was added to the aqueous solutions of the environment-friendly non-cyanide gold extraction agent prepared as above and aqua regia, respectively, at a solid-liquid ratio of 1:2, stirring for 20 h at 300 rpm, followed by suction filtration to obtain the gold lixiviums from the mobile phone circuit board.

The gold leaching rate from the mobile phone circuit board was measured by the same method as above, and the results were shown in FIG. 7.

FIG. 7 showed the gold leaching rates from e-waste by the NBS/Py gold extraction solution (curve 1), the aqueous solution of the alkaline Br/pyridine hydrochloride environment-friendly non-cyanide gold extraction agent (curve 2), the aqueous solution of the alkaline Br/DMAP environment-friendly non-cyanide gold extraction agent (curve 3) at different concentrations of pyridine derivative, and the dotted line in the figure was the minimum leaching rate requirement in the process of extracting gold from e-waste in industry.

The comparison of the NBS/Py gold extraction solution, the aqueous solution of the alkaline Br/pyridine hydrochloride environment-friendly non-cyanide gold extraction agent, and the aqueous solution of the alkaline Br/DMAP environment-friendly non-cyanide gold extraction agent was shown in Table 1 below:

**Table 1**

| Gold extraction agent | Maximum gold leaching rate from ores (at a solid-liquid ratio of 1:2) | Maximum gold leaching rate from e-waste | Convenience of transportation | Toxicity | Odour |
|---|---|---|---|---|---|
| NBS/Py gold extraction solution | 58% | 56% (unacceptable in industry) | Liquid formulation, inconvenient to transport | Low toxicity | Odor |
| Alkaline Br/pyridine hydrochloride environment-friendly non-cyanide gold extraction agent | 90% | 88% (acceptable in industry ) | Solid formula, convenient to transport | Nontoxic | Odorless |
| Alkaline Br/DMAP environment-friendly | 88% | 87% (acceptable | Solid formula, | Nontoxic | Odorless |
| non-cyanide gold extraction agent | | in industry ) | convenient to transport | | |

Compared with the NBS/Py gold extraction solution prepared from N-bromosuccinimide and liquid pyridine, at a solid-liquid ratio of 1:2 (the solid-liquid ratio of 1:2 is required in industrial production), the environment-friendly non-cyanide gold extraction agent of the present application prepared from alkaline Br and a solid pyridine derivative had a higher gold leaching rate from low-grade gold ores and e-waste, and however, the gold leaching rate by the NBS/Py gold extraction solution did not exceed 60% of the minimum leaching rate requirement in the process of extracting gold from gold ores and e-waste in industry under various conditions. The reason may lie in that: as an organic liquid, pyridine has a poor dispersivity at a solid-liquid ratio of 1:2, leading to a low gold leaching rate from ores and e-waste by using the NBS/Py gold extraction solution, while the main components of the environment-friendly non-cyanide gold extraction agent compounded by alkaline Br and an solid pyridine derivative were solid reagents, which can be well dispersed in an aqueous solution, thus improving the gold leaching rate. The environment-friendly non-cyanide gold extraction agent provided by the present application was more suitable for industrial application.

### Experiment Example 4

1. The aqueous solution of the alkaline Br/pyridine hydrochloride environment-friendly non-cyanide gold extraction agent prepared in Example 1, the NBS/Py gold extraction solution prepared in Comparative Example 1, the alkaline Br/Py gold extraction solution prepared in Comparative Example 2, and the NBS/pyridine hydrochloride gold extraction solution prepared in Comparative Example 3 were determined for the gold leaching rate from low-grade gold ores at different solid-liquid ratios:
   1 g of low-grade gold ores was added to the gold extraction agent (or gold extraction solution) prepared as above and aqua regia, respectively, at a solid-liquid ratio of 1:0.5, 1:1, 1:1.5, and 1:2, respectively, stirring for 20 h at 300 rpm, followed by suction filtration to obtain the gold lixiviums from the low-grade gold ores.

The gold leaching rate from low-grade gold ores was determined by the same method as above, and the results were shown in Table 2.

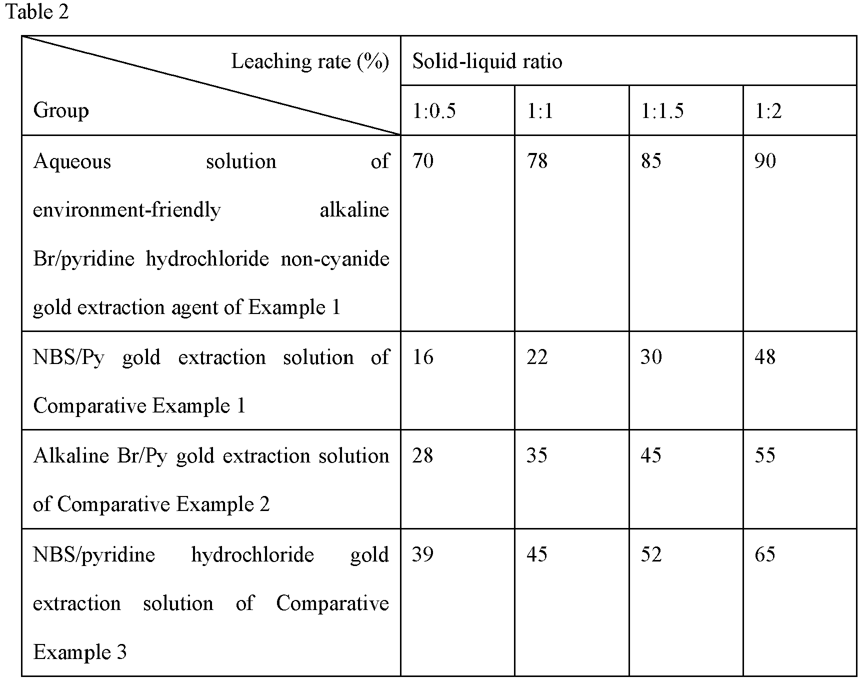

2. The aqueous solution of alkaline Br/pyridine hydrochloride environment-friendly non-cyanide gold extraction agent prepared in Example **1,** the NBS/Py gold extraction solution prepared in Comparative Example **1,** the alkaline Br/Py gold extraction solution prepared in Comparative Example 2, and the NBS/pyridine hydrochloride gold extraction solution prepared in Comparative Example 3 were determined for the gold leaching rate from the mobile phone circuit board at different solid-liquid ratios:
5 g of the mobile phone circuit board was added to the gold extraction agents (or gold extraction solutions) prepared as above and aqua regia, respectively, at a solid-liquid ratio of 1:0.5, 1:1, 1:1.5, and 1:2, respectively, stirring for 20 h at 300 rpm, followed by suction filtration to obtain the gold lixiviums from the mobile phone circuit board.

The gold leaching rate from the mobile phone circuit board was measured by the same method as above, and the results were shown in FIG. 3.

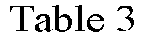

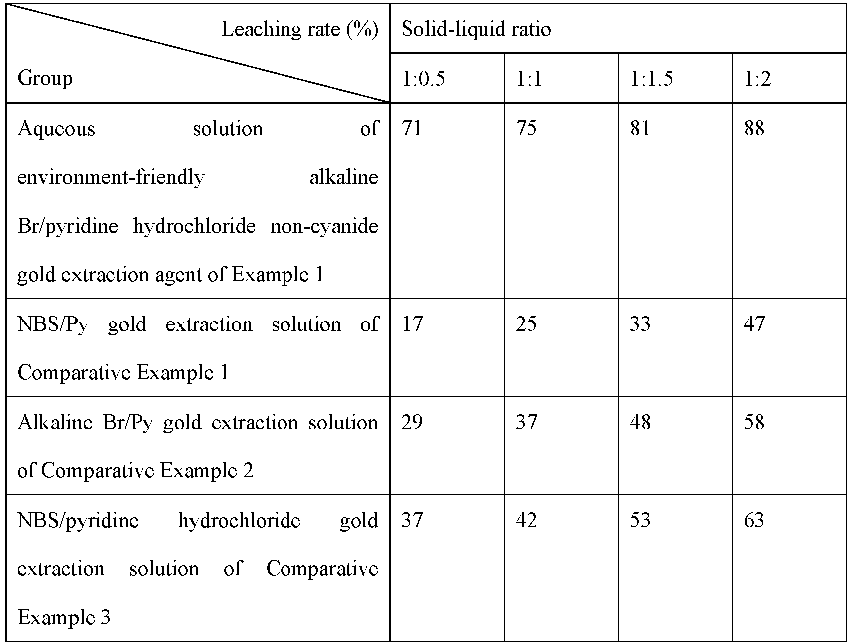

Finally, it should be noted that the above examples are only intended to illustrate the technical solutions of the present invention but not to limit them; although the present invention has been described in detail with reference to the foregoing examples.

### Industrial applicability

The embodiments of the invention provide an environment-friendly non-cyanide gold extraction agent, a preparation method, and use thereof, wherein, the environment-friendly non-cyanide gold extraction agent comprises a solid pyridine derivative, N-bromosuccinimide, and a base; the method for preparing an aqueous solution of the environment-friendly non-cyanide gold extraction agent comprises the following steps: dissolving N-bromosuccinimide in an aqueous solution, adding a base, and stirring to obtain an alkaline Br aqueous solution; dissolving a solid pyridine derivative into the alkaline Br aqueous solution. The environment-friendly non-cyanide gold extraction agent provided by the invention is not restricted by a low liquid-solid ratio required in industrial production, and can achieve an industrially acceptable high gold leaching rate with an industrially allowable low liquid-solid ratio and at a low reagent concentration, thus being suitable for industrial application; and it achieves a high gold leaching rate with a relatively low toxicity; and the reagents used are cheap and easily available, and the use thereof is not limited by long-distance transportation, thus facilitating in large-scale industrial production.

## Claims

1. An environment-friendly non-cyanide gold extraction agent, comprising a solid pyridine derivative, N-bromosuccinimide, and a base;
wherein the base and the N-bromosuccinimide are mixed in an aqueous solution in which N-bromosuccinimide is transformed into molecular bromine and bromine ions; and
wherein the solid pyridine derivative comprises at least one of pyridine hydrochloride, 4-dimethylaminopyridine, 4-hydroxypyridine, or 2,2-bipyridine.

2. An aqueous solution of the environment-friendly non-cyanide gold extraction agent of claim 1, comprising said aqueous alkaline Br solution and said solid pyridine derivative dissolved into said aqueous solution

3. A method for preparing an aqueous solution of the environment-friendly non-cyanide gold extraction agent, comprising the steps of:
dissolving N-bromosuccinimide in an aqueous solution, adding a base, and stirring to obtain an aqueous alkaline Br solution;
dissolving a solid pyridine derivative in the aqueous alkaline Br solution to obtain the aqueous solution of the environment-friendly non-cyanide gold extraction agent;
wherein after dissolving the solid pyridine derivative in the aqueous alkaline Br solution, the pH of the solution is adjusted to 4.0-9.0, and
wherein the solid pyridine derivative comprises at least one of pyridine hydrochloride, 4-dimethylaminopyridine, 4-hydroxypyridine, or 2,2-bipyridine.

4. The method according to claim 3, wherein after dissolving the solid pyridine derivative in the aqueous alkaline Br solution, the pH of the solution is adjusted to 6.0-9.0, further optionally 7.0-8.0.

5. The environment-friendly non-cyanide gold extraction agent according to claim 1, wherein the base comprises at least one of potassium hydroxide, sodium hydroxide, quicklime, sodium carbonate, or sodium bicarbonate.

6. The aqueous solution of the environment-friendly non-cyanide gold extraction agent according to claim 2, wherein the base comprises at least one of potassium hydroxide, sodium hydroxide, quicklime, sodium carbonate, or sodium bicarbonate.

7. The method according to claim 3, wherein the base comprises at least one of potassium hydroxide, sodium hydroxide, quicklime, sodium carbonate, or sodium bicarbonate.

8. The environment-friendly non-cyanide gold extraction agent according to claim 1, wherein the ratio of the amount of N-bromosuccinimide to the amount of the solid pyridine derivative is 1-50:5-300, optionally 5-20:10-200.

9. The aqueous solution of the environment-friendly non-cyanide gold extraction agent according to claim 2, wherein the concentration of N-bromosuccinimide in the aqueous alkaline Br solution is 1-50 mM, optionally 5-20 mM, and further optionally 10-15 mM.

10. The method according to claim 3, wherein the concentration of N-bromosuccinimide in the aqueous alkaline Br solution is 1-50 mM, optionally 5-20 mM, and further optionally 10-15 mM.

11. The aqueous solution of the environment-friendly non-cyanide gold extraction agent according to claim 2, wherein the concentration of the solid pyridine derivative in the aqueous solution of the environment-friendly non-cyanide gold extraction agent is 5-300 mM, optionally 10-200 mM, and further optionally 50-100 mM.

12. Use of the environment-friendly non-cyanide gold extraction agent according to claim 1 or the method according to claim 3 in extracting gold from low-grade ores and e-waste.

13. Use of the aqueous solution of the environment-friendly non-cyanide gold extraction agent according to claim 2 in extracting gold from low-grade ores and e-waste.

14. The use according to claim 13, wherein the low-grade ores or e-waste are added into the aqueous solution of the environment-friendly non-cyanide gold extraction agent at a solid-liquid ratio of 1:2, stirring for 20 h at 300 rpm, followed by suction filtration to obtain a gold lixivium from the low-grade ores or e-waste.

## Patentansprüche

1. Umweltfreundliches cyanidfreies Goldextraktionsmittel, umfassend ein festes Pyridinderivat, N-Bromsuccinimid und eine Base;
wobei die Base und das N-Bromsuccinimid in einer wässrigen Lösung gemischt werden, in der N-Bromsuccinimid in molekulares Brom und Bromionen umgewandelt wird; und
wobei das feste Pyridinderivat mindestens eines von Pyridinhydrochlorid, 4-Dimethylaminopyridin, 4-Hydroxypyridin oder 2,2-Bipyridin umfasst.

2. Wässrige Lösung des umweltfreundlichen cyanidfreien Goldextraktionsmittels nach Anspruch 1, umfassend die wässrige alkalische Br-Lösung und das in der wässrigen Lösung gelöste feste Pyridinderivat.

3. Verfahren zum Herstellen einer wässrigen Lösung des umweltfreundlichen cyanidfreien Goldextraktionsmittels, umfassend die Schritte:
Lösen von N-Bromsuccinimid in einer wässrigen Lösung, Zugeben einer Base und Rühren, um eine wässrige alkalische Br-Lösung zu erhalten;
Lösen eines festen Pyridinderivats in der wässrigen alkalischen Br-Lösung, um die wässrige Lösung des umweltfreundlichen cyanidfreien Goldextraktionsmittels zu erhalten;
wobei nach dem Auflösen des festen Pyridinderivats in der wässrigen alkalischen Br-Lösung der pH-Wert der Lösung auf 4,0-9,0 eingestellt wird, und
wobei das feste Pyridinderivat mindestens eines von Pyridinhydrochlorid, 4-Dimethylaminopyridin, 4-Hydroxypyridin oder 2,2-Bipyridin umfasst.

4. Verfahren nach Anspruch 3, wobei nach dem Auflösen des festen Pyridinderivats in der wässrigen alkalischen Br-Lösung der pH-Wert der Lösung auf 6,0-9,0, ferner gegebenenfalls 7,0-8,0, eingestellt wird.

5. Umweltfreundliches cyanidfreies Goldextraktionsmittel nach Anspruch 1, wobei die Base mindestens eines von Kaliumhydroxid, Natriumhydroxid, Brandkalk, Natriumcarbonat oder Natriumbicarbonat umfasst.

6. Wässrige Lösung des umweltfreundlichen cyanidfreien Goldextraktionsmittels nach Anspruch 2, wobei die Base mindestens eines von Kaliumhydroxid, Natriumhydroxid, Brandkalk, Natriumcarbonat oder Natriumbicarbonat umfasst.

7. Verfahren nach Anspruch 3, wobei die Base mindestens eines von Kaliumhydroxid, Natriumhydroxid, Brandkalk, Natriumcarbonat oder Natriumbicarbonat umfasst.

8. Umweltfreundliches cyanidfreies Goldextraktionsmittel nach Anspruch 1, wobei das Verhältnis der Menge an N-Bromsuccinimid zur Menge des festen Pyridinderivats 1-50:5-300, gegebenenfalls 5-20:10-200, beträgt.

9. Wässrige Lösung des umweltfreundlichen cyanidfreien Goldextraktionsmittels nach Anspruch 2, wobei die Konzentration von N-Bromsuccinimid in der wässrigen alkalischen Br-Lösung 1-50 mM, gegebenenfalls 5-20 mM und ferner gegebenenfalls 10-15 mM beträgt.

10. Verfahren nach Anspruch 3, wobei die Konzentration von N-Bromsuccinimid in der wässrigen alkalischen Br-Lösung 1-50 mM, gegebenenfalls 5-20 mM und ferner gegebenenfalls 10-15 mM beträgt.

11. Wässrige Lösung des umweltfreundlichen cyanidfreien Goldextraktionsmittels nach Anspruch 2, wobei die Konzentration des festen Pyridinderivats in der wässrigen Lösung des umweltfreundlichen cyanidfreien Goldextraktionsmittels 5-300 mM, gegebenenfalls 10-200 mM und ferner gegebenenfalls 50-100 mM beträgt.

12. Verwendung des umweltfreundlichen cyanidfreien Goldextraktionsmittels nach Anspruch 1 oder des Verfahrens nach Anspruch 3 bei der Extraktion von Gold aus minderwertigen Erzen und Elektroschrott.

13. Verwendung der wässrigen Lösung des umweltfreundlichen cyanidfreien Goldextraktionsmittels nach Anspruch 2 bei der Extraktion von Gold aus geringwertigen Erzen und Elektroschrott.

14. Verwendung nach Anspruch 13, wobei die geringwertigen Erze oder der Elektroschrott in die wässrige Lösung des umweltfreundlichen cyanidfreien Goldextraktionsmittels in einem Fest-Flüssig-Verhältnis von 1:2 gegeben werden, unter Rühren für 20 h bei 300 U/min, gefolgt von einer Saugfilterung, um eine Goldlauge aus den geringwertigen Erzen oder dem Elektroschrott zu erhalten.

## Revendications

1. Un agent d'extraction d'or respectueux de l'environnement et sans cyanure, comprenant un dérivé solide de la pyridine, du N-bromosuccinimide et une base ;
dans lequel la base et le N-bromosuccinimide sont mélangés dans une solution aqueuse dans laquelle le N-bromosuccinimide est transformé en brome moléculaire et en ions bromure ; et
dans lequel le dérivé solide de pyridine comprend au moins un parmi : le chlorhydrate de pyridine, la 4-diméthylaminopyridine, la 4-hydroxypyridine ou la 2,2-bipyridine.

2. Une solution aqueuse de l'agent d'extraction de l'or respectueux de l'environnement et sans cyanure selon la revendication 1, comprenant ladite solution aqueuse alcaline de Br et ledit dérivé solide de pyridine dissous dans ladite solution aqueuse.

3. Un procédé de préparation d'une solution aqueuse de l'agent d'extraction de l'or respectueux de l'environnement et sans cyanure, comprenant les étapes suivantes :
dissoudre du N-bromosuccinimide dans une solution aqueuse, ajouter une base et agiter pour obtenir une solution aqueuse alcaline de Br ;
dissoudre un dérivé solide de pyridine dans la solution aqueuse alcaline de Br pour obtenir la solution aqueuse de l'agent d'extraction de l'or respectueux de l'environnement et sans cyanure ;
dans lequel, après dissolution du dérivé solide de pyridine dans la solution aqueuse alcaline de Br, le pH de la solution est ajusté à une valeur comprise entre 4,0 et 9,0, et
dans lequel le dérivé solide de pyridine comprend au moins un parmi : le chlorhydrate de pyridine, la 4-diméthylaminopyridine, la 4-hydroxypyridine ou la 2,2-bipyridine.

4. Le procédé selon la revendication 3, dans lequel, après dissolution du dérivé de pyridine solide dans la solution aqueuse alcaline de Br, le pH de la solution est ajusté à une valeur comprise entre 6,0 et 9,0, et optionnellement entre 7,0 et 8,0.

5. L'agent d'extraction de l'or respectueux de l'environnement et sans cyanure selon la revendication 1, dans lequel la base comprend au moins un parmi : l'hydroxyde de potassium, l'hydroxyde de sodium, la chaux vive, le carbonate de sodium ou le bicarbonate de sodium.

6. La solution aqueuse de l'agent d'extraction de l'or respectueux de l'environnement et sans cyanure selon la revendication 2, dans laquelle la base comprend au moins un parmi : l'hydroxyde de potassium, l'hydroxyde de sodium, la chaux vive, le carbonate de sodium ou le bicarbonate de sodium.

7. Le procédé selon la revendication 3, dans lequel la base comprend au moins un parmi : l'hydroxyde de potassium, l'hydroxyde de sodium, la chaux vive, le carbonate de sodium ou le bicarbonate de sodium.

8. L'agent d'extraction de l'or respectueux de l'environnement et sans cyanure selon la revendication 1, dans lequel le rapport entre la quantité de N-bromosuccinimide et la quantité du dérivé solide de la pyridine est de 1-50:5-300, optionnellement de 5-20:10-200.

9. La solution aqueuse de l'agent d'extraction de l'or respectueux de l'environnement et sans cyanure selon la revendication 2, dans laquelle la concentration en N-bromosuccinimide dans la solution aqueuse alcaline de Br est comprise entre 1 et 50 mM, optionnellement entre 5 et 20 mM, et, plus optionnellement encore, entre 10 et 15 mM.

10. Le procédé selon la revendication 3, dans lequel la concentration en N-bromosuccinimide dans la solution aqueuse alcaline de Br est comprise entre 1 et 50 mM, optionnellement entre 5 et 20 mM, et, plus optionnellement encore, entre 10 et 15 mM.

11. La solution aqueuse de l'agent d'extraction de l'or respectueux de l'environnement et sans cyanure selon la revendication 2, dans laquelle la concentration du dérivé solide de pyridine dans la solution aqueuse de l'agent d'extraction de l'or respectueux de l'environnement et sans cyanure est comprise entre 5 et 300 mM, optionnellement entre 10 et 200 mM, et plus optionnellement encore entre 50 et 100 mM.

12. Utilisation de l'agent d'extraction de l'or respectueux de l'environnement et sans cyanure selon la revendication 1 ou du procédé selon la revendication 3 pour l'extraction de l'or à partir de minerais à faible teneur et de déchets électroniques.

13. Utilisation de la solution aqueuse de l'agent d'extraction de l'or respectueux de l'environnement et sans cyanure selon la revendication 2 pour l'extraction de l'or à partir de minerais à faible teneur et de déchets électroniques.

14. L'utilisation selon la revendication 13, dans laquelle les minerais à faible teneur ou les déchets électroniques sont ajoutés à la solution aqueuse de l'agent d'extraction de l'or respectueux de l'environnement et sans cyanure selon un rapport solide/liquide de 1:2, en agitant pendant 20 h à 300 tr/min, puis par filtration sous vide pour obtenir un lixiviat d'or à partir des minerais à faible teneur ou des déchets électroniques.
